# EUROPÄISCHE PATENTSCHRIFT

(11) **EP 1 463 592 B1**
(45) Veröffentlichungstag und Bekanntmachung des Hinweises auf die Patenterteilung: **05.09.2007**
(21) Anmeldenummer: 03729245.5
(22) Anmeldetag: 13.01.2003
(51) Int. Cl.: B21D 41/04

(54) **VERSCHLUSS EINES GASLEITSYSTEMS**
CLOSURE FOR A GAS SUPPLY SYSTEM
FERMETURE POUR SYSTEME D'ALIMENTATION EN GAZ

(30) Priorität: 11.01.2002 DE 10201002
(43) Veröffentlichungstag der Anmeldung: 06.10.2004
(73) Patentinhaber: Huperz Automotive Systems GmbH & Co KG, 57439 Attendorn (DE)
(72) Erfinder: HUPERZ, Ulrich, 57439 Attendorn (DE)
(74) Vertreter: Wenzel & Kalkoff
(86) Internationale Anmeldenummer: PCT/EP2003/000219
(87) Internationale Veröffentlichungsnummer: WO 2003/057386

(56) Entgegenhaltungen:
- EP-A- 0 353 982
- DE-A- 3 136 608
- DE-A- 3 231 493
- DE-A- 3 802 807
- DE-C- 10 133 086
- US-A- 2 313 068
- US-A- 2 776 473
- US-A- 4 008 821
- PATENT ABSTRACTS OF JAPAN vol. 008, no. 224 (M-331), 13. Oktober 1984 (1984-10-13) -& JP 59 107730 A (SUMITOMO DENKI KOGYO KK), 22. Juni 1984 (1984-06-22)

## Beschreibung

Die Erfindung betrifft einen gasdichten Verschluss eines Gasleitsystems aus Metall, insbesondere für den Verschluss eines Airbag-Gasleitsystems sowie ein Verfahren zur Herstellung eines gasdichten Verschlusses.

Airbag-Systeme werden zunehmend in Kraftfahrzeugen eingesetzt. Sie werden inzwischen an verschiedenen Stellen des Fahrzeugs eingesetzt, um frontale aber auch seitliche Kollisionen zu dämpfen. Diese Airbag-Systeme sind teilweise mit gasführenden Leitungen aus Metall ausgestattet. Die Wandungen dieser Leitungen sind so bemessen und das Material ist so gewählt, dass das Gasleitsystem ausreichend gasdicht ist, auch den hohen Drücken standzuhalten, die beim Auslösen der Airbags auftreten. Die Enden der Leitungen werden, falls erforderlich, am Fahrzeug befestigt, um das Airbag-System sicher zu fixieren.

Der gasdichte Verschluss dieser Gasleitsysteme muss bei Unfällen mit Überschlägen des Fahrzeugs eine Standzeit von ca. 5 Sekunden bieten. Danach baut der Druck wieder ab, um die Insassen des Fahrzeugs wieder freizugeben. Bisher wurde bei einigen Ausführungsformen der Verschluss hergestellt durch einen Kunststoff-Stopfen, der in das offene Ende des Gasleitsystems eingesetzt wurde, und der dann gasdicht mit der Leitung zu verbinden, in der Regel zu verkrimpen war. Diese Lösung ist materialintensiv, denn um ausreichende Gasdichtigkeit zu gewährleisten musste der Stopfen ausreichend tief in das Gasleitsystem eindringen und die Dichtigkeit der Verbindung erforderte aufwändige Sicherungen.

Nach der DE 100 22 462 wird vorgeschlagen, eine Endkappe, die aus demselben Material gefertigt ist, wie die Leitung selbst, auf das Leitungsende aufzuschweißen, vorzugsweise mit Laserschweißverfahren, Elektronenschweiß- oder Bogenschweißverfahren. Diese Schweißverfahren sind teuer und erfordern hohe Präzision.

JP 57064427 A beschreibt das Einbringen einer elastischen Schicht aus Aluminium, Kupfer und Gummi in ein Rohrende und das anschließende Zusammenpressen des Rohrendes unter kontrolliertem Druck. Das Zusammenpressen erfolgt gegen eine Schablone, um eine korrekte Formgebung zu gewährleisten. Nach dem Schließen des Rohrendes ist die Schablone aus dem freien Rohrende zu entfernen und ein weiteres Ansatzstück des Rohres ist ggf. anzuschließen. Dieses Verfahren ist aufwändig und durch das Einsetzen der Schablone nur in wenigen Fällen wirtschaftlich anwendbar.

DE 38 02 807 schlägt für Behälter und Leitungen die bereits unter Gasdruck stehen, vor einen verformbaren Dichtwerkstoff in einen Füllstützen einzubringen und diesen dann zu einem Wellblech zu verquetschen.

DE 32 31 493, die als nächstkommender Stand der Technik anzusehen ist, schlägt vor, einen niedrigschmelzenden Werkstoff durch die Verformungswärme zu verflüssigen. Nach Beenden des Umformvorgangs verfestigt sich dieser niedrigschmelzende Werkstoff wieder und wirkt abdichtend. Das Umformen erfolgt bei unveränderten Wandstärken des umgeformten Werkstücks.

Es ist Aufgabe der Erfindung, einen gasdichten Verschluss, der einfach herstellbar und sicher ist und ein Verfahren vorzuschlagen, mit dem ein solcher gasdichter Verschluss für ein Gasleitsystem aus Metall bereitgestellt wird.

Diese Aufgabe wird gelöst durch den Verschluss für ein Gasleitsystem aus Metall nach Anspruch 1 und das erfindungsgemäße Verfahren zur Herstellung dieses Verschlusses sowie durch die erfindungsgemäße Verwendung von Lotlegierungen.

Das Einbringen einer Schicht eines plastisch verformbaren Werkstoffs in den zu verschließenden Bereich des Gasleitsystems ermöglicht ein einfaches und sicheres Abdichten beim Aneinanderfügen der Wandung in dem Bereich des Gasleitsystems, der gasdicht zu verschließen ist. Das Metall der Wandung des Gasleitsystems und die Schicht des plastisch verformbaren Werkstoffs liegen nach dem Verschließen gasdicht aneinander an und bilden einen Verschluss für ein Gasleitsystem, der den vorstehend genannten Anforderungen an Sicherheit und Dichtigkeit entspricht.

Zum Herstellen des Verschlusses ist jeder plastisch verformbare Werkstoff geeignet, der dauerhaft druckdicht ist. Eine besonders bevorzugte Gruppe von Werkstoffen sind Metalle und metallorganische Verbindungen. Gut geeignet sind aber auch natürliche oder synthtische Polymere, sofern sie die erforderliche Alterungsbeständigkeit aufweisen und in Verbindung mit der Wandung des Gasleitsystems ein druckdichter Verschluss herstellbar ist. So sind z. B. Klebstoffe, Schichtwerkstoffe aus Metallen und Fasern oder Silikonverbindungen geeignet zur Herstellung von gasdichten Verschlüssen von Gasleitsystemen. Ebenfalls geeignet sind natürliche oder synthetische Faserstoffe, die gasresistent und alterungsbeständig sind. Diese Eigenschaften der plastisch verformbaren Werkstoffe sind den bekannten Produktinformationen zu entnehmen oder durch wenige einfache Versuche zu ermitteln. Auch Kombinationen von mindestens zwei der vorgenannten plastisch verformbaren Werkstoffe sind zur Herstellung eines gasdichten Verschlusses eines Gasleitsystems geeignet. Beispielsweise können faserverstärkte Kunststoffe oder metallorganische Lotlegierungen eingesetzt werden.

Die Schicht aus plastisch verformbarem Werkstoff ist vorzugsweise als Folie aus Metall bzw. aus einer metallischen oder metallorganischen Lotlegierung ausgebildet. Sofern im Folgenden von eine Schicht aus Metall beschrieben wird, schließen die jeweiligen Ausführungen dazu auch eine Schicht aus einem anderen plastischen Werkstoff ein.

Die Schicht aus plastischem Werkstoff ist bei dem noch offenen Gasleitsystem in den zu verschließenden Bereich eingesetzt und erstreckt sich über eine gewisse Strecke, üblicherweise zwischen 1 und 30 mm, vorzugsweise zwischen 5 und 20 mm in die Leitung hinein. Sie weist eine Dicke zwischen 0,05 und 5 mm auf, vorzugsweise von 0,2 bis 2 mm. Diese Schicht aus plastischem Werkstoff erstreckt sich vorzugsweise über den maximalen Querschnitt, der von der Wandung des Gasleitsystems umschlossen ist. Es kann sich aber auch als ausreichend erweisen, eine etwas schmalere Schicht in den Querschnitt einzusetzten, beispielsweise dann, wenn die Randbereiche der Wandung des Gasleitsystems beim Verpressen mit der Schicht aus plastischem Werkstoff eine ausreichende Dicke aufweisen und eine genügend starke Verbindung miteinander eingehen.

Ein gasdichter Verschluss wird durch mechanisches Zusammenpressen der Wandung des Gasleitsystems mit der darin angeordneten Schicht aus plastischem Werkstoff hergestellt. Dabei müssen Wandung und plastischer Werkstoff eng aneinander anliegen, um ausreichende Gasdichtigkeit herzustellen. Dabei ist zu gewährleisten, dass ein plötzlich auftretender Druckunterschied von diesem Verschluss sicher, das heißt, ohne Druckverlust für zumindest 5 Sekunden, aufgefangen wird. Das Verschließen wird, insbesondere bei Verwendung von Polymeren oder Faserstoffen oder Kombinationen daraus dadurch unterstützt, dass beim Zusammenpressen eine Verzahnung zwischen der Wandung und dem plastischen Werkstoff erzeugt wird, die eine bessere Gasdichtigkeit gewährleistet oder die es ermöglicht, die Abmessungen des Verschlusses so klein wie möglich zu halten. Die Verzahnung kann durch abschnittsweises Eindringen der Wandung in den plastisch verformbaren Werkstoff oder auf andere Art erzeugt werden. Das Verschließen des Gasleitsystems und damit das Herstellen des Verschlusses erfolgt, ohne dass eine Schablone oder ein anderer Fremdkörper in dem Gasleitsystems erforderlich ist.

Um eine gasdichte Verbindung herzustellen, wird alternativ der Bereich, in dem Wandung und plastisch verformbarer Werkstoff aneinander anliegen, erwärmt. Wird beispielsweise eine Schicht aus Metall verwendet, die aus einer schmelzfähigen Legierung, besonders bevorzugt einer Kupferlegierung besteht. Da diese Schicht aus Metall nur sehr kurzfristig erhitzt werden muss, um die gewünschte gasdichte Verbindung mit der Wandung des Gasleitsystems herzustellen, ist es an sich unerheblich, bei welcher Temperatur die Metallschicht plastisch verformbar wird. Es wird aber besonders bevorzugt, wenn diese Temperatur nicht über der Schmelztemperatur des Metalls liegt, aus dem das Gasleitsystem hergestellt ist.

Der erfindungsgemäß gasdichte Verschluss eines Gasleitsystems weist eine Wandung aus Metall und eine Schicht aus Metall auf, die mit dem Metall der Wandung gasdicht verbunden ist, dadurch dass nach dem Aufeinanderpressen von Wandung und Metallschicht die Metallschicht erwärmt, insbesondere durch ein Lotverfahren erwärmt wird.

Das erfindungsgemäße Verfahren zur Herstellung des Verschlusses des Gasleitsystems aus Metall wird nachstehend erläutert. Zunächst wird eine Schicht aus einem plastisch verformbaren Werkstoff in den zu verschließenden Bereich eines Gasleitsystems gelegt. Diese Schicht ist vorzugsweise bandförmig. Die Wandung des Gasleitsystems wird dann mechanisch verformt, bis die Wandung an der Schicht aus plastisch verformbaren Werkstoff anliegt. Dieser mechanische Verschluss ist aber noch nicht ausreichend gasdicht.

Um die geforderte Gasdichtigkeit sicher zu erreichen, wird eine mechanische Verzahnung der Wandung mit der Schicht aus plastisch verformbaren Werkstoff vorgenommen und ggf. mindestens die Schicht aus dem eingelegten Werkstoff abschnittsweise erhitzt. Die Schicht aus Metall wird z. B. bis zur plastischen Verformung erhitzt, und durch das Verformen oder Fließen der Schicht aus Metall entsteht eine Verbindung mit der Wandung aus Metall, die gasdicht ist. Diese Verbindung ist einfach und sicher herstellbar und sie ist alterungsbeständig.

Nach einer bevorzugten Ausführungsform des erfindungsgemäßen Verfahrens werden die Wandung und die Schicht aus plastisch verformbarem Werkstoff beim Zusammendrücken der Wandung mechanisch ineinander verzahnt.

Dadurch ist eine gute Gasdichtigkeit gewährleistet, vor allem dann, wenn plastisch verformbare Werkstoffe wie Gummi, Silikon oder andere natürliche oder synthetische Polymerwerkstoffe eingesetzt werden.

Das Erhitzen der Schicht aus Metall kann grundsätzlich in der Weise erfolgen, dass beide Werkstoffe erhitzt werden. Es ist aber vorzugsweise auf die Schicht aus Metall beschränkt. Ein solch selektives Erhitzen ist möglich, wenn beispielsweise mit Induktions- oder Widerstandsverfahren erhitzt wird. Die Erwärmung, die z. B. erforderlich ist, um einen Zwei-Komponenten-Kleber aushärten zu lassen, liegt deutlich niedriger als das Erhitzen auf Löttemperaturen.

Um den hohen Anforderungen an die Produktsicherheit zu genügen, wird nach einer bevorzugten Weiterbildung des erfindungsgemäßen Verfahrens während bzw. unmittelbar nach dem mindestens abschnittsweisen Erhitzen des Bereichs, in den die Schicht aus Metall eingesetzt ist, mechanischer Druck auf diesen Bereich ausgeübt. Dadurch wird eine vollständige und dauerhafte Verbindung zwischen Metall und Metall gewährleistet.

Es hat sich herausgestellt, dass übliche Lotlegierungen für diesen Verwendungszweck hervorragend geeignet sind. Sie sind preiswert und in der erforderlichen Dimensionierung und Konfektionierung verfügbar. Als sehr geeignet haben sich Kupferlegierungen erwiesen.

Der Verschluss eines Gasleitsystems ist häufig als Flachprägung ausgebildet und wird oft auch zur Befestigung der Gasleitsysteme im Fahrzeug verwendet. Da der erfindungsgemäße Verschluss flächig abgedichtet ist, können ohne weiteres Laschen oder andere Öffnungen zum Befestigen des Gasleitsystems in den Verschluss eingearbeitet bzw. daran angefügt werden.

Am Beispiel der Zeichnungen wird ein Ausführungsbeispiel der Erfindung und des erfindungsgemäßen Verfahrens näher erläutert. Es zeigen:
- Fig. 1: eine Draufsicht auf den Verschluss eines Gasleitsystems aus Metall für ein Airbag-System
- Fig. 2: einen Schnitt durch den Verschluss eines Gasleitsystems aus Metall für ein Airbag-System aus Fig. 1

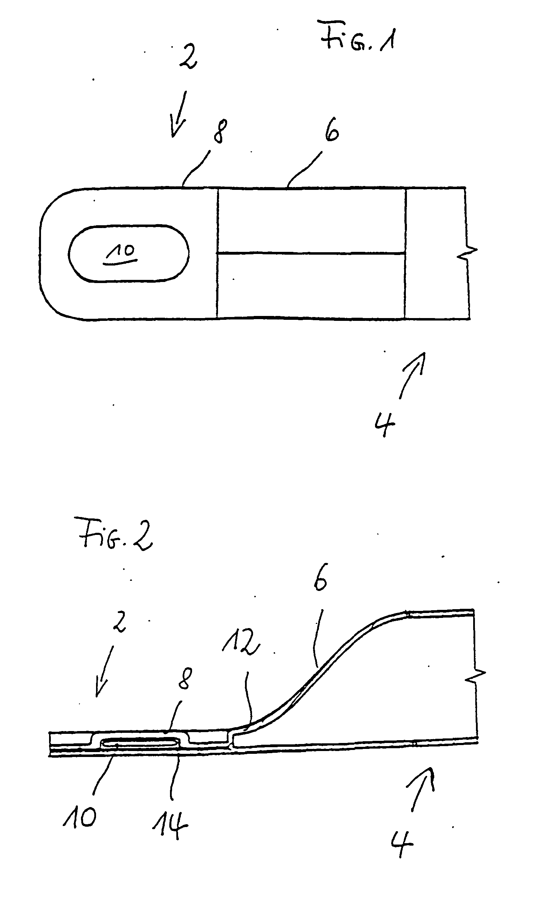

Fig. 1 zeigt ein Endstück 2 eines Gasleitsystems aus Metall für ein Airbag-System. Das Gasleitsystem 4 mündet in ein sich im Querschnitt verjüngendes Zwischenstück 6, das in dem Verschluss 8 des Gasleitsystems 4 endet. Im Gegensatz zum runden Querschnitt des Gasleitsystems 4 und zum sich verjüngenden Zwischenstück 6 ist der Verschluss 8 flach. Er weist keinen Hohlraum auf.

In den Verschluss 8 ist eine Öse 10 eingearbeitet, die zum Befestigen des Gasleitsystems an einem Fahrzeug, in das das Airbag-System eingebaut wird, dient.

Fig. 2 zeigt dasselbe Endstück 2 des Gasleitsystems aus Metall. Die Wandung 12 umschließt sowohl das Gasleitsystem 4 als auch das einteilig daran angeformte, sich verjüngende Zwischenstück 6 und den Verschluss 8 des Endstücks. In den Verschluss 8 ist ein Streifen 14 einer bandförmige Folie aus Kupfer-Lotlegierung mit einer Materialstärke von ca. 0,3 mm eingesetzt. Der gewünschte gasdichte Verschluss des Gasleitsystems wird dadurch hergestellt, dass zunächst der bandförmige Streifen 14 aus Kupfer-Lotlegierung in den Bereich des Verschlusses 8 des Gasleitsystems eingesetzt wird. Das Metall der Wandung 12 wird dann in einem Zustand der plastischen Verformbarkeit im Bereich des Zwischenstücks und des Verschlusses so geformt, dass die Wandung 12 beim Verschluss 8 des Gasleitsystems flächig an dem Streifen 14 aus Kupfer-Lotlegierung anliegt.

Der Streifen 14 wird dann durch ein Induktionsverfahren oder ein Widerstandsverfahren berührungslos erhitzt, bis er plastisch verformbar ist. Das Metall der Wandung 12 und der Streifen 14 werden durch mechanischen Druck eines Formwerkzeugs gasdicht miteinander verbunden. Nach dem Abkühlen ist das Gasleitsystem durch den Verschluss gasdicht verschlossen. Das Abkühlen verändert die Dichtigkeit der Verbindung nicht. Das Material für die Öse 10 wird aus dem Verschluss 8 herausgenommen.

Nach einem weiteren Ausführungsbeispiel wird ein bandförmiger Streifen von gas- und alterungsbeständigem Silikon in einen Bereich eines Gasleitungssystems aus Metall eingesetzt, dessen Wandung dann unter Druck zusammengepresst wird. Der bzw. die Druckstempel, die auf die Wandung einwirken, weisen eine profilierte Oberfläche auf. Beim Zusammenpressen der Wandung wird deshalb an den erhaben vorstehenden Abschnitten des oder der Druckstempel das Metall der Wandung in den Streifen aus Silikon eingedrückt. Es entsteht eine mechanische Verzahnung. Der Verschluss für das Gasleitsystem ist nun druckdicht ausgebildet. Zum Herstellen dieses Verschlusses ist keine Schablone erforderlich, die in das Gasleitsystem eingesetzt wird. Der Verschluss kann deshalb ohne weiteres unmittelbar am Ende einer langen Rohrleitung ausgebildet werden, da nach dem Verpressen keine weiteren Nacharbeiten erforderlich sind.

Nach einem dritten Ausführungsbeispiel wird ein bandförmiger Streifen eines Zwei-Komponenten-Klebstoffs auf der Basis Polyurethan in ein Ende eines Gasleitungssystems aus Metall eingebracht. Die Wandung des Gasleitungssystems wird in dem Bereich, in den der Streifen eingebracht ist, mechanisch zusammengepresst. Nachdem die Wandung an dem Streifen des Zwei-Komponenten-Klebstoffs anliegt, wird dieser Bereich des Gasleitungssystems erwärmt, so dass der Klebstoff abbindet und eine gasdichte und alterungsbeständige Verbindung entsteht. Es ist vorgesehen, dass zusätzlich beim Zusammenpressen der Wandung eine mechanische Verzahnung eingeprägt wird.

## Patentansprüche

1. Verschluss für ein Gasleitsystem aus Metall, insbesondere für den Verschluss einer Airbag-Leitung, wobei das Gasleitsystem (4) einen im Betriebszustand gasführenden Querschnitt und eine Wandung (12) aus Metall hat, wobei in dem Bereich, der den Querschnitt des Gasleitsystems (4) verschließt, mindestens abschnittsweise eine Schicht (14) aus einem plastisch verformbaren Werkstoff eingebracht ist, und der Bereich mit dem darin befindlichen, plastisch verformbaren Werkstoff gasdicht verschlossen ist,
**dadurch gekennzeichnet, dass** der Bereich des Verschlusses und der darin befindliche, plastisch verformbare Werkstoff mechanisch miteinander verzahnt sind.

2. Verschluss nach Anspruch 1, **dadurch gekennzeichnet, dass** als plastisch verformbarer Werkstoff Metall, metallorganische Verbindungen, metallische oder metallorganische Legierungen, natürliche oder synthetische Polymere, insbesondere Klebstoffe, natürliche oder synthetische Faserstoffe oder ein Werkstoff, der aus einer Kombination von mindestens zwei der vorgenannten Werkstoffe besteht, in den Verschluss eingebracht ist.

3. Verschluss nach Anspruch 1, **dadurch gekennzeichnet, dass** die Schicht (14) aus dem plastisch verformbaren Werkstoff innerhalb der Wandung (12) aus Metall angeordnet ist.

4. Verschluss nach Anspruch 1, **dadurch gekennzeichnet, dass** die Schicht (14) aus dem plastisch verformbaren Werkstoff den gesamten Durchmesser ausfüllt, der von der Wandung (12) aus Metall umschlossen ist.

5. Verschluss nach Anspruch 1, **dadurch gekennzeichnet, dass** die Schicht (14) aus dem plastisch verformbaren Werkstoff aus einer schmelzfähigen Legierung besteht.

6. Verschluss nach Anspruch 1, **dadurch gekennzeichnet, dass** die Schicht (14) aus dem plastisch verformbaren Werkstoff bei einer Temperatur plastisch verformbar wird, die nicht über der Schmelztemperatur des Metalls des Gasleitsystems liegt.

7. Verschluss nach Anspruch 2, **dadurch gekennzeichnet, dass** die Schicht (14) aus dem plastisch verformbaren Werkstoff aus Metall, insbesondere aus einer Kupferlegierung oder einer kupferorganischen Legierung besteht.

8. Verschluss nach Anspruch 2, **dadurch gekennzeichnet, dass** die Schicht (14) aus dem plastisch verformbaren Werkstoff aus einem natürlichen oder synthetischen Kunststoff besteht, der sich nach dem Einbringen und während bzw. unmittelbar beim gasdichten Verbinden des plastisch verformbaren Werkstoffs mit dem Metall des Gasleitsystems gegen die Wandung des Gasleitsystems dehnt.

9. Verschluss nach Anspruch 2, **dadurch gekennzeichnet, dass** die Schicht (14) aus dem plastisch verformbaren Werkstoff aus einem natürlichen oder synthetischen Klebstoff besteht, der während oder nach dem gasdichten Verbinden des Klebstoffs mit der Wandung des Gasleitsystems eine klebende Verbindung mit der Wandung aufbaut.

10. Verschluss nach Anspruch 1, **dadurch gekennzeichnet, dass** die Schicht (14) aus dem plastisch verformbaren Werkstoff eine Stärke von ca. 0,05 bis 5 mm, vorzugsweise von 0,2 bis 2 mm aufweist.

11. Verfahren zum Herstellen eines Verschlusses für ein Gasleitsystem aus Metall, insbesondere für den Verschluss einer Airbag-Leitung, mit den Schritten
- Einlegen einer Schicht (14) aus einem plastisch verformbaren Werkstoff in den zu verschließenden Bereich (8) eines Gasleitsystems (4) aus Metall
- mechanisches Verformen der Wandung des Gasleitsystems und ggf. der Schicht (14) aus plastisch verformbaren Werkstoff, bis die Wandung des Gasleitsystems und die Schicht (14) aus einem plastisch verformbaren Werkstoff flächig aneinander anliegen
- gasdichtes Verschließen des Verschlusses (8) **dadurch gekennzeichnet, dass** ein mechanisches Verzahnen von Wandung und plastischem Werkstoff erzeugt wird sowie ggf. durch mindestens abschnittsweises Erhitzen des Bereiches des Gasleitsystems (4), in den die Schicht (14) aus plastisch verformbarem Werkstoff eingesetzt ist.

12. Verfahren nach Anspruch 11, **dadurch gekennzeichnet, dass** die Schicht (14) aus Metall erhitzt wird, bis das Metall plastisch verformbar ist und eine gasdichte Verbindung zwischen dem Metall des Gasleitsystems und der Schicht (14) aus Metall entstanden ist.

13. Verfahren nach Anspruch 11, **dadurch gekennzeichnet, dass** während des mindestens abschnittsweisen Erhitzens des Bereichs in den die Schicht (14) aus Metall eingesetzt ist, mechanischer Druck auf diesen Bereich ausgeübt wird.

14. Verfahren nach Anspruch 11, **dadurch gekennzeichnet, dass** die Schicht (14) aus Metall durch Induktions- oder Widerstandsverfahren erhitzt wird.

15. Verfahren nach Anspruch 11, **dadurch gekennzeichnet, dass** die Schicht (14) aus Metall aus einem Lotwerkstoff besteht.

16. Verfahren nach Anspruch 15, **dadurch gekennzeichnet, dass** es sich um einen Lotwerkstoff auf Kupferbasis handelt.

17. Verfahren nach Anspruch 11, **dadurch gekennzeichnet, dass** als plastisch verformbarer Werkstoff natürliche oder synthetische Polymere, insbesondere ein Klebstoff, natürliche oder synthetische Faserstoffe, insbesondere Papier eingesetzt werden.

18. Verfahren nach Anspruch 11, **dadurch gekennzeichnet, dass** es sich bei der Schicht aus einem plastisch verformbaren Werkstoff um eine bandförmige Schicht (14) handelt.

19. Verwendung von Lotlegierungen zur Herstellung eines Verschlusses eines Gasleitsystems aus Metall nach Anspruch i oder zur Durchführung eines Verfahrens nach Anspruch 11.

## Claims

1. Seal for a gas supply system made of metal, in particular for sealing an airbag conduit, the gas supply system (4) having, during operation, a gas-conducting cross-section and a wall (12) made of metal, a layer (14) made of a plastically deformable material being at least partially inserted in the region which seals the cross-section of the gas supply system (4), and the region with the plastically deformable material located therein being sealed in a gas-tight manner,
**characterised in that** the region of the seal and the plastically deformable material located therein are mechanically interlocked with one another.

2. Seal according to Claim 1, **characterised in that** metal, metal-organic compounds, metallic or metal-organic alloys, natural or synthetic polymers, in particular adhesives, natural or synthetic fibre materials or a material which consists of a combination of at least two of the aforementioned materials is inserted into the seal as plastically deformable material.

3. Seal according to Claim 1, **characterised in that** the layer (14) made of the plastically deformable material is arranged inside the wall (12) made of metal.

4. Seal according to Claim 1, **characterised in that** the layer (14) made of the plastically deformable material fills up the entire diameter which is enclosed by the wall (12) made of metal.

5. Seal according to Claim 1, **characterised in that** the layer (14) made of the plastically deformable material consists of a meltable alloy.

6. Seal according to Claim 1, **characterised in that** the layer (14) made of the plastically deformable material becomes plastically deformable at a temperature which does not exceed the melting point of the metal of the gas supply system.

7. Seal according to Claim 2, **characterised in that** the layer (14) consists of the plastically deformable material made of metal, in particular made of a copper alloy or a copper-organic alloy.

8. Seal according to Claim 2, **characterised in that** the layer (14) made of the plastically deformable material consists of a natural or synthetic plastic which expands against the wall of the gas supply system, after the insertion and during and/or directly with the gas-tight bonding of the plastically deformable material with the metal of the gas supply system.

9. Seal according to Claim 2, **characterised in that** the layer (14) consists of the plastically deformable material made of a natural or synthetic adhesive which creates an adhesive bond with the wall during or after the gas-tight bonding of the adhesive with the wall of the gas supply system.

10. Seal according to Claim 1, **characterised in that** the layer (14) made of the plastically deformable material has a thickness of approximately 0.05 to 5 mm, preferably of 0.2 to 2 mm.

11. Method for producing a seal for a gas supply system made of metal, in particular for sealing an airbag conduit, comprising the steps
- inserting a layer (14) made of a plastically deformable material into the region (8) to be sealed of a gas supply system (4) made of metal
- mechanically deforming the wall of the gas supply system and if necessary the layer (14) made of plastically deformable material until the wall of the gas supply system and the layer (14) made of a plastically deformable material lie flat against one another
- gas-tight sealing of the seal (8) **characterised in that** a mechanical interlocking of the wall and the plastic material is produced and, if necessary, by at least partially heating the region of the gas supply system (4) into which the layer (14) made of plastically deformable material is inserted.

12. Method according to Claim 11, **characterised in that** the layer (14) made of metal is heated until the metal is plastically deformable and a gas-tight bond is produced between the metal of the gas supply system and the layer (14) made of metal.

13. Method according to Claim 11, **characterised in that** during the at least partial heating of the region into which the layer (14) made of metal is inserted, mechanical pressure is exerted on this region.

14. Method according to Claim 11, **characterised in that** the layer (14) made of metal is heated by induction or resistance techniques.

15. Method according to Claim 11, **characterised in that** the layer (14) made of metal consists of a solder material.

16. Method according to Claim 15, **characterised in that** the solder material is copper-based.

17. Method according to Claim 11, **characterised in that** natural or synthetic polymers, in particular an adhesive, natural or synthetic fibre materials, in particular paper, are used as plastically deformable material.

18. Method according to Claim 11, **characterised in that** the layer made of a plastically deformable material is a strip-shaped layer (14).

19. Use of solder alloys for producing a seal of a gas supply system made of metal according to Claim 1 or for carrying out a method according to Claim 11.

## Revendications

1. Fermeture pour un système de conduite de gaz en métal, en particulier pour la fermeture d'une conduite d'airbag, le système de conduite de gaz (4) ayant une section transversale conduisant le gaz dans l'état de fonctionnement et une paroi (12) en métal, une couche (14) en matériau déformable plastiquement étant mise en place, au moins de façon segmentaire, dans la zone qui ferme la section transversale du système de conduite de gaz (4), et la zone avec le matériau déformable plastiquement qui s'y trouve étant fermée de façon étanche au gaz,
**caractérisée en ce que** la zone de la fermeture et le matériau déformable plastiquement qui s'y trouve engrènent mécaniquement l'une avec l'autre.

2. Fermeture selon la revendication 1, **caractérisée en ce que**, en tant que matériau déformable plastiquement, on met en place dans la fermeture du métal, des composés organométalliques, des alliages métalliques ou organométalliques, des polymères naturels ou synthétiques, en particulier des adhésifs, des matières fibreuses naturelles ou synthétiques, ou un matériau qui se compose d'une combinaison d'au moins deux des matériaux précités.

3. Fermeture selon la revendication 1, **caractérisée en ce que** la couche (14) en matériau déformable plastiquement est disposée à l'intérieur de la paroi (12) en métal.

4. Fermeture selon la revendication 1, **caractérisée en ce que** la couche (14) en matériau déformable plastiquement remplit la totalité du diamètre qui est entouré par la paroi (12) en métal.

5. Fermeture selon la revendication 1, **caractérisée en ce que** la couche (14) en matériau déformable plastiquement se compose d'un alliage fusible.

6. Fermeture selon la revendication 1, **caractérisée en ce que** la couche (14) en matériau déformable plastiquement est déformable plastiquement à une température qui n'est pas supérieure à la température de fusion du métal du système de conduite de gaz.

7. Fermeture selon la revendication 2, **caractérisée en ce que** la couche (14) en matériau déformable plastiquement se compose de métal, en particulier d'un alliage de cuivre ou d'un alliage cupro-organique.

8. Fermeture selon la revendication 2, **caractérisée en ce que** la couche (14) en matériau déformable plastiquement se compose d'une matière plastique naturelle ou synthétique qui, après la mise en place et pendant ou directement lors du raccordement étanche au gaz du matériau déformable plastiquement au métal du système de conduite de gaz, se dilate contre la paroi du système de conduite de gaz.

9. Fermeture selon la revendication 2, **caractérisée en ce que** la couche (14) en matériau déformable plastiquement se compose d'un adhésif naturel ou synthétique qui, pendant ou après le raccordement étanche au gaz de l'adhésif à la paroi du système de conduite de gaz, constitue une liaison adhésive avec la paroi.

10. Fermeture selon la revendication 1, **caractérisée en ce que** la couche (14) en matériau déformable plastiquement présente une épaisseur d'environ 0,05 à 5 mm, de préférence de 0,2 à 2 mm.

11. Procédé de fabrication d'une fermeture pour un système de conduite de gaz en métal, en particulier pour la fermeture d'une conduite d'airbag, comprenant les étapes
- d'insertion d'une couche (14) en matériau déformable plastiquement dans la zone (8) à fermer d'un système de conduite de gaz (4) en métal.
- de déformation mécanique de la paroi du système de conduite de gaz et éventuellement de la couche (14) en matériau déformable plastiquement jusqu'à ce que la paroi du système de conduite de gaz et la couche (14) en matériau déformable plastiquement appuient l'une sur l'autre de façon étendue,
- d'obturation étanche au gaz de la fermeture (8), **caractérisé en ce qu'**un engrènement mécanique de la paroi et du matériau plastique est produit ainsi que éventuellement par un échauffement au moins segmentaire de la zone du système de conduite de gaz (4) dans laquelle la couche (14) en matériau déformable plastiquement est insérée.

12. Procédé selon la revendication 11, **caractérisé en ce que** la couche (14) en métal est chauffée jusqu'à ce que le métal soit déformable plastiquement et jusqu'à ce qu'un raccordement étanche au gaz soit établi entre le métal du système de conduite de gaz et la couche (14) en métal.

13. Procédé selon la revendication 11, **caractérisé en ce que**, pendant le chauffage, au moins segmentaire, de la zone dans laquelle la couche (14) en métal est insérée, une pression mécanique est exercée sur cette couche.

14. Procédé selon la revendication 11, **caractérisé en ce que** la couche (14) en métal est chauffée par un procédé par induction ou par résistance.

15. Procédé selon la revendication 11, **caractérisé en ce que** la couche (14) en métal se compose d'un matériau de brasage.

16. Procédé selon la revendication 15, **caractérisé en ce qu'**il s'agit d'un matériau de brasage à base de cuivre.

17. Procédé selon la revendication 11, **caractérisé en ce que**, en tant que matériau déformable plastiquement, on utilise des polymères naturels ou synthétiques, en particulier un adhésif, des matières fibreuses naturelles ou synthétiques, en particulier du papier.

18. Procédé selon la revendication 11, **caractérisé en ce que**, dans le cas de la couche en matériau déformable plastiquement, il s'agit d'une couche (14) en forme de bande.

19. Utilisation d'alliages de brasage pour la fabrication d'une fermeture d'un système de conduite de gaz en métal selon la revendication 1 ou pour la réalisation d'un procédé selon la revendication 11.
